(19) 

Europäisches Patentamt
European Patent Office
Office européen des brevets

(11) **EP 4 327 997 A1**

(12) **EUROPEAN PATENT APPLICATION**
published in accordance with Art. 153(4) EPC

(43) Date of publication:
**28.02.2024 Bulletin 2024/09**

(21) Application number: **22791534.5**

(22) Date of filing: **29.03.2022**

(51) International Patent Classification (IPC):
**B28B 1/30** (2006.01)    **C04B 38/00** (2006.01)
**C04B 35/10** (2006.01)

(52) Cooperative Patent Classification (CPC):
**B28B 1/30; C04B 35/10; C04B 35/64; C04B 38/00;**
**Y02E 60/50**

(86) International application number:
**PCT/JP2022/015654**

(87) International publication number:
**WO 2022/224759 (27.10.2022 Gazette 2022/43)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **21.04.2021 JP 2021072062**

(71) Applicants:
• **Sumitomo Chemical Company Limited**
  **Tokyo 103-6020 (JP)**
• **Japan Fine Ceramics Center**
  **Nagoya-shi, Aichi 456-8587 (JP)**

(72) Inventors:
• **KIMURA, Teiichi**
  **Nagoya-shi, Aichi 456-8587 (JP)**
• **SUEHIRO, Satoshi**
  **Nagoya-shi, Aichi 456-8587 (JP)**
• **NASU, Tomomichi**
  **Tsukuba-shi, Ibaraki 300-3294 (JP)**
• **SADAOKA, Kazuo**
  **Niihama-shi, Ehime 792-8521 (JP)**

(74) Representative: **Vossius & Partner**
  **Patentanwälte Rechtsanwälte mbB**
  **Siebertstrasse 3**
  **81675 München (DE)**

(54) **METHOD FOR MANUFACTURING POROUS CERAMICS SINTERED BODY AND POROUS CERAMICS SINTERED BODY**

(57)    Disclosed is a method for manufacturing a porous ceramic sintered body including: molding a ceramic powder having a tamped density of 1.0 g/cm$^3$ or less to obtain a ceramic article; forming a carbon powder-containing layer on a surface of the ceramic article to obtain a laminate; and irradiating a surface of the carbon powder-containing layer of the laminate with a laser beam to form a porous ceramic sintered portion.

**FIG. 1C**

EP 4 327 997 A1

**Description**

TECHNICAL FIELD

The present disclosure relates to a method for manufacturing a porous ceramic sintered body and a porous ceramic sintered body manufactured by the method.

BACKGROUND ART

As a ceramic sintered body, a porous body or a dense body is used according to the application of the ceramic sintered body. As a method for manufacturing a ceramic sintered body, a method of calcining in a calcination furnace and a method of sintering with a laser beam are known (for example, Patent Documents 1 and 2).

Patent Document 1 discloses a method for calcining a porous ceramic sintered body in an electric furnace. It is described that a porous ceramic sintered body, for example, including first pores having a length of 30 $\mu$m or more and 3000 $\mu$m or less and a width (pore diameter) of 5 $\mu$m or more and 50 $\mu$m or less and second pores having a maximum width of 5 $\mu$m or more and 400 $\mu$m or less can be manufactured.

In Patent Document 1, a porous ceramic sintered body is manufactured by calcining, in an electric furnace, a molded article formed from a molding material, wherein the molding material is obtained by mixing a ceramic powder, a first pore-forming material for forming first pores, and a second pore-forming material for forming second pores, further adding a binder, and kneading the mixture.

Patent Document 2 discloses a method for manufacturing a dense ceramic sintered body, in which method a layer containing a carbon powder is formed on a surface of an unsintered ceramic article, which is then sintered by irradiating the surface of the carbon powder-containing layer with a laser beam. The unsintered ceramic article can be formed from an aggregate of ceramic particles for sintering.

PRIOR ART DOCUMENT

PATENT DOCUMENTS

Patent Document 1: JP 2014-227324 A
Patent Document 2: WO 2017/135387 A

SUMMARY OF THE INVENTION

PROBLEMS TO BE SOLVED BY THE INVENTION

Porous ceramic sintered bodies can be used for a thermal conductor, a catalyst carrier, a separation membrane, and so on. In particular, in applications of a catalyst carrier and a separation membrane, there is a need for a porous ceramic sintered body containing more pores having smaller dimensions (in particular, the pore diameter is 1 $\mu$m or less).

In addition, since a porous ceramic sintered body having a high porosity (that is, the relative density is low) tends to decrease in strength, there is also a need for a porous ceramic sintered body having a low relative density and relatively high strength.

The porous ceramic sintered body described in Patent Document 1 has a large pore diameter of 5 $\mu$m or more because it is manufactured using a pore-forming material. In view of this, the present inventors studied a method for manufacturing a porous ceramic sintered body having a low relative density and high strength without using a pore-forming material while following the calcination conditions of Patent Document 1. However, it has been found that the following reasons make it difficult to manufacture a porous ceramic sintered body that achieves both high porosity and high strength without using a pore-forming material.

In the case of calcining a porous ceramic sintered body in the electric furnace used in Patent Document 1, when the sintering temperature is lowered, pores among ceramic particles can be inhibited from being blocked due to sintering, so that a porous ceramic sintered body having a high porosity can be obtained. However, since the sintering temperature is low, the bonding between ceramic particles is weak, so that the porous ceramic sintered body has a lowered strength.

On the other hand, when the sintering temperature is increased, the bonding between ceramic particles is strengthened, so that a porous ceramic sintered body having high strength is obtained. However, sintering between ceramic particles is excessively promoted to block pores among ceramic particles, so that the porous ceramic sintered body has a reduced porosity.

Patent Document 2 discloses a method for laser-sintering a dense ceramic sintered body, but does not study a method for laser-sintering a porous ceramic sintered body.

Under such circumstances, an object of an embodiment of the present invention is to provide a method for manufacturing a porous ceramic sintered body, the method being capable of achieving both high porosity (that is, low relative density) and high strength without using a pore-forming material. In addition, another embodiment of the present invention aims to provide a porous ceramic sintered body obtained by the manufacture method.

SOLUTIONS TO THE PROBLEMS

Aspect 1 of the present invention is a method for manufacturing a porous ceramic sintered body including: molding a ceramic powder having a tamped density of 1.0 g/cm$^3$ or less to obtain a ceramic article; forming a carbon powder-containing layer on a surface of the ceramic article to obtain a laminate; and irradiating a surface of the carbon powder-containing layer of the laminate with a laser beam to form a porous ceramic sintered portion.

Aspect 2 of the present invention is the method for manufacturing a porous ceramic sintered body according to Aspect 1, wherein the ceramic powder is a powder composed of one compound selected from the group consisting of aluminum oxide, aluminum oxynitride, and aluminum nitride.

Aspect 3 of the present invention is the method for manufacturing a porous ceramic sintered body according to Aspect 1 or 2, wherein the laser beam to be applied has an average laser density of 150 W/cm$^2$ or more and 600 W/cm$^2$ or less.

Aspect 4 of the present invention is a porous ceramic sintered body having an average pore diameter of 0.01 $\mu$m or more and 1.00 $\mu$m or less, and satisfying the following formulas (1) to (3):

$$35\% \leq D \leq 75\% \cdots (1)$$

$$1 < P/(331/(1 + \exp(-0.55 \times (D-57))) + 75) \cdots (2)$$

$$P < 450 \text{ MPa} \cdots (3)$$

where

D is a relative density (%) of the porous ceramic sintered body, and
P is a flexural strength (MPa) of the porous ceramic sintered body.

Aspect 5 of the present invention is the porous ceramic sintered body according to Aspect 4, wherein the porous ceramic sintered body has an open porosity of 35% or more and less than 60%.

EFFECTS OF THE INVENTION

According to the embodiments of the present invention, a method for manufacturing a porous ceramic sintered body, the method capable of achieving both low relative density and high strength without using a pore-forming material, and a porous ceramic sintered body obtained by the manufacture method are acquired.

BRIEF DESCRIPTION OF THE DRAWINGS

Fig. 1A is a schematic cross-sectional view illustrating the method for manufacturing a porous ceramic sintered body according to a first embodiment.
Fig. 1B is a schematic cross-sectional view illustrating the method for manufacturing a porous ceramic sintered body according to the first embodiment.
Fig. 1C is a schematic cross-sectional view illustrating the method for manufacturing a porous ceramic sintered body according to the first embodiment.
Fig. 1D is a schematic cross-sectional view illustrating the method for manufacturing a porous ceramic sintered body according to the first embodiment.

Fig. 2A is a schematic cross-sectional view illustrating the method for manufacturing a porous ceramic sintered body according to a second embodiment.

Fig. 2B is a schematic cross-sectional view illustrating the method for manufacturing a porous ceramic sintered body according to the second embodiment.

Fig. 2C is a schematic cross-sectional view illustrating the method for manufacturing a porous ceramic sintered body according to the second embodiment.

Fig. 3 is a graph showing a relationship between a relative density and a flexural strength of the porous ceramic sintered body according to a third embodiment.

DETAILED DESCRIPTION

The present inventors intensively studied a method for manufacturing a porous ceramic sintered body without using a pore-forming material. As a result, the present inventors have found for the first time that it is possible to manufacture a porous ceramic sintered body having a small average pore diameter, a low relative density, and high strength without using a pore-forming material by using a ceramic powder having a relatively low tamped density and laser-sintering a ceramic article formed from the ceramic powder. The reason for this is not clear, but it is presumed that when a ceramic article is formed from a ceramic powder having a low tamped density, (1) a ceramic article having a relatively low green density (GD) is easily formed, and (2) an appropriate number of contact points are formed among a plurality of ceramic particles contained in the ceramic powder inside the ceramic article. Then, by laser-sintering the ceramic article, ceramic particles can be bonded to each other at the contact points among the ceramic particles while sufficiently retaining the number of pores contained inside the ceramic article. As a result, a porous ceramic sintered body having a low relative density and high strength can be obtained. In addition, this manufacture method can reduce the average pore diameter of a porous ceramic sintered body because of using no pore-forming material.

<First embodiment: Method for manufacturing porous ceramic sintered body>

The method for manufacturing a porous ceramic sintered body according to a first embodiment includes the following Steps 1 to 3.

[Step 1] Molding a ceramic powder having a tamped density of 1.0 $g/cm^3$ or less to obtain a ceramic article.

[Step 2] Forming a carbon powder-containing layer on a surface of the ceramic article to obtain a laminate.

[Step 3] Irradiating a surface of the carbon powder-containing layer of the laminate with a laser beam to form a porous ceramic sintered portion.

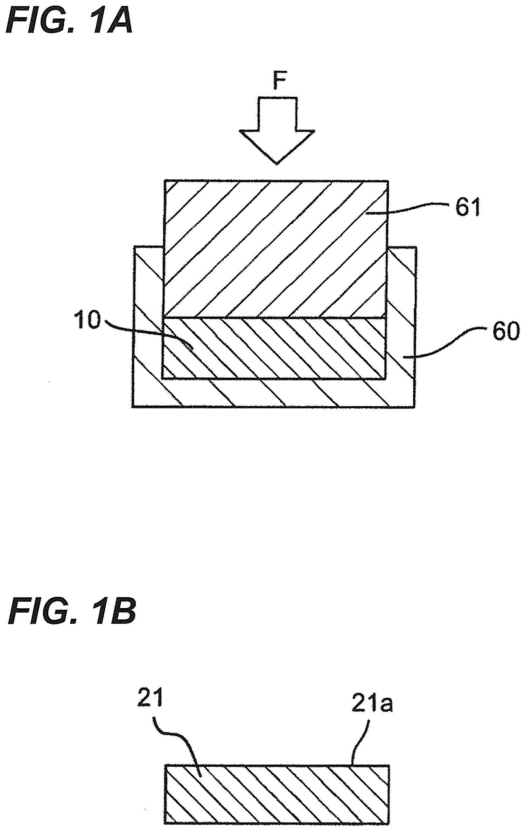

Hereinafter, the method for manufacturing a porous ceramic sintered body according to the first embodiment will be described with reference to Figs. 1A to 1D.

[Step 1: Obtaining ceramic article 21]

In Step 1, a molded article (ceramic article 21) is prepared by molding a ceramic powder having a tamped density of 1.0 $g/cm^3$ or less.

The tamped density is measured in accordance with JIS R 9301-2-3 (1999) "Alumina powder-Part 2: Determination of physical properties-3: Untamped density and tamped density". First, a sample (ceramic powder) is freely fallen and collected in a container (cylinder) having a known volume that is placed at rest with prevention from vibration. Thereafter, the cylinder containing the sample is dropped 100 times from a height of 3 cm to perform tapping (compression). The volume of the compressed sample is read, and the mass is divided by the volume to calculate a tamped density. In the course of the 100 tappings, it is confirmed that the volume of the powder after compression has been saturated.

Through using a ceramic powder having a low tamped density (1.0 $g/cm^3$ or less), a porous ceramic article having a low relative density (in other words, having many pores) can be formed. In addition, inside the ceramic article, a sufficient number of contact points can be generated among the plurality of ceramic particles contained in the ceramic powder. By sintering such a porous ceramic article at once in a short time by laser sintering, it is possible to bond ceramic particles to each other at contact points among ceramic particles while allowing many pores contained inside the porous ceramic article to remain. As a result, it is possible to obtain a porous ceramic sintered body having higher strength than the conventional one and containing a sufficient number of pores. In addition, since no pore-forming material is used for the purpose of forming pores, the dimension and shape of the pores do not depend on the dimension and shape of a pore-forming material. Consequently, a porous ceramic sintered body having a small pore diameter can be formed.

The tamped density of the ceramic powder is preferably 0.2 $g/cm^3$ or more and 0.9 $g/cm^3$ or less, and more preferably 0.3 $g/cm^3$ or more and 0.8 $g/cm^3$ or less.

The ceramic powder may be a powder composed of one compound selected from the group consisting of aluminum oxide, aluminum oxynitride, and aluminum nitride. From such a powder, a porous aluminum oxide (alumina) sintered body, a porous aluminum oxynitride sintered body, or a porous aluminum nitride sintered body can be formed.

The ceramic powder preferably has a particle size (median diameter) of 0.05 μm or more and 5.00 μm or less. A more preferable particle size (median diameter) is 0.10 μm or more and 1.00 μm or less. This makes it easy to form a porous ceramic sintered body having an average pore diameter of 0.01 μm or more and 1.00 μm or less.

In the present description, the "median diameter" refers to a particle diameter corresponding to 50% by mass (D50). The median diameter can be measured by a laser diffraction dispersion method.

Such a ceramic powder 10 is molded, and a ceramic article 21 is obtained. For example, as illustrated in Fig. 1A, the ceramic powder 10 is charged into a mold 60 for molding, and the ceramic powder 10 is pressed in the direction of arrow F with a pressurizing jig 61 to be pressure-molded. As a result, as illustrated in Fig. 1B, a ceramic article 21 having a prescribed shape is obtained.

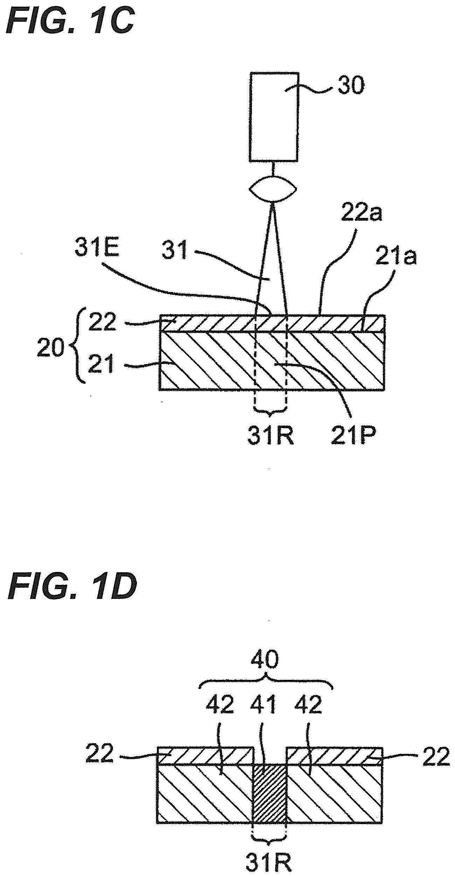

As to the density (GD) of the ceramic article 21, the value of GD is set such that the strength of the ceramic article 21 is such strength that at least the ceramic article 21 does not collapse when the carbon powder-containing layer 22 (Fig. 1C) is formed on a surface of the ceramic article 21 in Step 2 and the ceramic article 21 does not collapse when laser-sintered in Step 3. The GD is preferably 0.5 g/cm$^3$ or more and 2.0 g/cm$^3$ or less, and more preferably 0.9 g/cm$^3$ or more and 1.9 g/cm$^3$ or less. When the value of the GD is within this range, the ceramic article 21 is easily handled in Steps 2 and 3, and the porous ceramic sintered body obtained after sintering the ceramic article 21 can have a smaller relative density and a higher strength.

The GD of the ceramic article 21 is affected by the tamped density of the ceramic powder to be used. In addition, the GD can be controlled by the molding pressure at the time of forming the ceramic article 21.

The GD is calculated by dividing the weight (g) of the ceramic article 21 by the volume (cm$^3$) of the ceramic article 21.

[Step 2: Obtaining laminate 20]

In Step 2, a carbon powder-containing layer 22 is formed on a surface 21a of the ceramic article 21. As a result, a laminate 20 in which the ceramic article 21 and the carbon powder-containing layer 22 are laminated is obtained. The carbon powder contained in the carbon powder-containing layer 22 functions as a laser absorber. In the following [Step 3], the carbon powder generates heat through absorption of the laser beam applied, whereby the ceramic article 21 present under the carbon powder-containing layer 22 is sintered.

The carbon powder-containing layer 22 can be formed by a publicly known method (e.g., a sprinkling method using a spray or the like, a printing method such as screen printing, or an applying method such as a doctor blade method, a spin coating method, or a curtain coater method) using any one among only a carbon powder, a composition including a carbon powder and a binder, and a composition including a carbon powder and an organic solvent. The carbon powder-containing layer 22 may be formed throughout the surface 21a of the ceramic article 21 as illustrated in Fig. 1C, or may be partially formed only at prescribed positions on the surface 21a. The carbon powder contained in the carbon powder-containing layer 22 disappears due to heat generation during laser irradiation, so that the carbon powder substantially does not remain in the porous ceramic sintered body 40 after calcination.

The content of the carbon powder contained in the carbon powder-containing layer 22 is preferably 50% by mass or more, and more preferably 80% by mass or more from the viewpoint of enhancing laser beam absorptivity. The thickness of the carbon powder-containing layer 22 is preferably 5 nm to 30 μm, and more preferably 100 nm to 10 μm from the viewpoint of enhancing the laser beam absorptivity.

The carbon powder-containing layer 22 may contain a laser absorber other than the carbon powder as long as the physical properties of the porous ceramic sintered body 40 are not affected. For example, the carbon powder-containing layer 22 may contain a laser absorber other than the carbon powder (for example, black yttria) as long as the content of the laser absorber is 25% or less based on the total amount of the laser absorbers contained in the carbon powder-containing layer 22.

[Step 3: Forming porous ceramic sintered portion 41]

Step 3 is a step of sintering the ceramic article 21. In Step 3, the laminate 20 including the ceramic article 21 and the carbon powder-containing layer 22 is irradiated with a laser beam 31 on a surface 22a of the carbon powder-containing layer 22, thereby fabricating a porous ceramic sintered body 40 including a porous ceramic sintered portion 41. In the present description, the "porous ceramic sintered body 40" means one including the porous ceramic sintered portion 41 in at least a part thereof. Therefore, a non-sintered portion 42 may be included in another portion of the porous ceramic sintered body 40. The porous ceramic sintered body 40 preferably includes only the porous ceramic sintered portion 41.

When a prescribed position on the surface 22a of the carbon powder-containing layer 22 of the laminate 20 is irradiated with a laser beam 31 from a laser device 30 as illustrated in Fig. 1C, the carbon powder in the carbon powder-containing layer 22 absorbs the energy of the laser beam at an irradiated position 31E irradiated with the laser beam to generate heat. The carbon powder-containing layer 22 present at the irradiated position 31E disappears instantly with the heat generation. Then, in the ceramic article 21 located under the carbon powder-containing layer 22, a portion 21P existing in a region immediately below the irradiated position 31E (this region is referred to as "immediately below region 31R") is preheated to 800°C or higher (estimated temperature). When the portion 21P of the ceramic article 21 (since the carbon powder-containing layer 22 on a surface of the portion 21P has already disappeared, the surface of the portion 21P is exposed) is further irradiated with a laser beam 31, the temperature of the portion 21P rises. As a result, the ceramic powder in the portion 21P is sintered to form a porous ceramic sintered portion 41 (Fig. 1D). Thus, the porous ceramic sintered portion 41 can be locally formed only at a desired position (portion 21P) of the ceramic article 21.

Note that the ceramic article 21 is not sintered in a portion outside the immediately below region 31R immediately below the irradiated position 31E, so that a portion that has not been sintered becomes a non-sintered portion 42. The non-sintered portion 42 may be removed as necessary, or the non-sintered portion 42 may be sintered by further performing laser irradiation to enlarge the porous ceramic sintered portion 41.

The laser beam 31 may be applied only to a part (a prescribed position) of the surface 22a of the carbon powder-containing layer 22 as illustrated in Fig. 1C, or may be applied to throughout the surface 22a of the carbon powder-containing layer 22. By applying the laser beam to throughout the surface 22a of the carbon powder-containing layer 22, the entire ceramic article 21 can be turned to a sintered portion 41. Examples of a method of applying the laser beam 31 to the entire surface 22a include a method of simultaneously irradiating the entire surface using a laser beam 31 having a large spot diameter (simultaneous irradiation) and a method of irradiating the entire surface 22a by relatively moving the irradiated position 31E irradiated with the laser beam 31 having a small spot diameter (scanning irradiation). Examples of the scanning irradiation include a method of scanning a laser beam with the laminate 20 fixed, a method of applying a laser beam while changing the optical path of the laser beam through a light diffusion lens, and a method of applying a laser beam while moving the laminate 20 with the optical path of the laser beam fixed.

The type of the laser beam to be used is not particularly limited, but from the viewpoint of enhancing the laser beam efficiency, it is preferable to use a laser beam in a wavelength range where a high rate of absorption by the carbon powder is exhibited (from 500 nm to 11 $\mu$m). For example, an Nd:YAG laser, an Nd:YVO laser, an Nd:YLF laser, a titanium sapphire laser, or a carbon dioxide gas laser can be used.

The laser beam irradiation conditions are appropriately chosen depending on the sintering area, the sintering depth, etc. The average laser density is preferably 150 W/cm$^2$ or more and 600 W/cm$^2$ or less, and more preferably 200 W/cm$^2$ or more and 550 W/cm$^2$ or less from the viewpoint of appropriately progressing sintering.

The average laser density is determined by dividing the laser output (W) by the spot area (cm$^2$) of the laser beam.

In the case of simultaneous irradiation, the irradiation time of the laser beam may be set to any time during which the ceramic article 21 is sufficiently sintered. The irradiation time of the laser beam is set mainly on the basis of the laser density, and can be set, for example, in a range from 1 second to 60 minutes.

In the case of scanning irradiation, the relative movement speed of a laser spot with respect to the ceramic article 21 (referred to as "scan speed") may be set to a speed at which the ceramic article 21 is sufficiently sintered. The scan speed of the laser beam is set mainly on the basis of the laser density, and can be set, for example, in a range from 10 mm/s to 1000 mm/s.

The atmosphere where the carbon powder-containing layer 22 is irradiated with a laser beam is not particularly limited, and may be, for example, the air, nitrogen, argon, helium, or vacuum. The ceramic article 21 and/or the carbon powder-containing layer 22 may be preheated before laser beam irradiation. The preheating temperature is preferably 300°C or higher, more preferably 400°C or higher, and the upper limit of the preheating temperature is usually a temperature that is 200°C or more lower than the melting point of the ceramic for sintering. The preheating can be performed by, for example, an infrared lamp, a halogen lamp, resistance heating, high-frequency induction heating, or microwave heating.

<Second embodiment: Method for manufacturing porous ceramic sintered body>

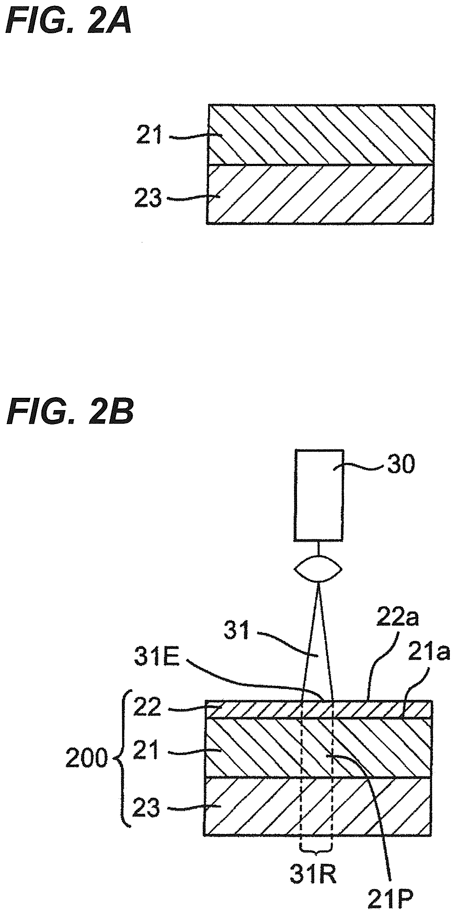

Figs. 2A to 2C are schematic cross-sectional views for explaining the method for manufacturing a porous ceramic sintered body 40 according to a second embodiment. The second embodiment is different from the first embodiment in that a ceramic article 21 is formed on a base material 23, but is the same as the first embodiment in other respects. Hereinafter, description will be made mainly on differences from the first embodiment.

[Step 1: Obtaining ceramic article 21]

As illustrated in Fig. 2A, a ceramic powder 10 is molded on the base material 23 to prepare a molded article (ceramic article 21) on the base material 23.

The base material 23 is preferably made of at least one member selected from among metals, alloys, and ceramics. As a method of forming the ceramic article 21 on the base material 23, the ceramic article can be formed by a conventionally publicly-known method such as a thermal spraying method, an electron beam physical vapor deposition method, a laser chemical vapor deposition method, a cold spraying method, and a method including applying a slurry (containing a ceramic powder for sintering, a dispersion medium, and a polymer binder to be used as necessary), drying the slurry, and degreasing the slurry. The base material 23 and the ceramic article 21 may be joined, or the ceramic article 21 may be placed on the base material 23 without being joined.

[Step 2: Obtaining laminate 200]

As illustrated in Fig. 2B, a carbon powder-containing layer 22 is formed on a surface 21a of the ceramic article 21. As a result, a laminate 200 in which the base material 23, the ceramic article 21, and the carbon powder-containing layer 22 are laminated is obtained.

[Step 3: Forming porous ceramic sintered portion 41]

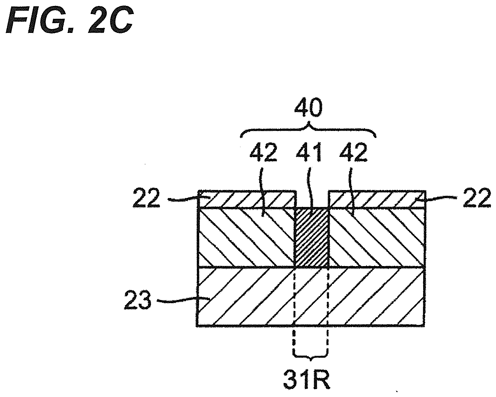

As illustrated in Figs. 2B and 2C, the surface 22a of the carbon powder-containing layer 22 of the laminate 200 is irradiated with a laser beam 31 to form a porous ceramic sintered portion 41 in the ceramic article 21. As a result, a porous ceramic sintered body 40 including the porous ceramic sintered portion 41 and a non-sintered portion 42 is formed on the base material 23.

<Third embodiment: Porous ceramic sintered body>

A third embodiment relates to a porous ceramic sintered body obtained by sintering a ceramic article by laser irradiation by the method described in the first or second embodiments. The third embodiment is directed to a porous ceramic sintered body including no non-sintered portion (that is, composed only of a porous ceramic sintered portion).

The porous ceramic sintered body according to the third embodiment has an average pore diameter of 0.01 $\mu$m or more and 1.00 $\mu$m or less, and satisfies the following Formulas (1) to (3):

$$35\% \leq D \leq 75\% \cdots (1)$$

$$1 < P/(331/(1 + \exp(-0.55 \times (D\text{-}57))) + 75) \cdots (2)$$

$$P < 450 \, \mathrm{MPa} \cdots (3)$$

where

D is a relative density (%) of the porous ceramic sintered body, and
P is a flexural strength (MPa) of the porous ceramic sintered body.

Hereinafter, the above features will be described one after another.

· Average pore diameter

Since the porous ceramic sintered body of the third embodiment was sintered without using a pore-forming material, the pore diameter was small, and the average pore diameter was 0.01 $\mu$m or more and 1.00 $\mu$m or less. As a result, a porous ceramic sintered body having a large specific surface area and a small relative density is obtained.

The average pore diameter is measured by mercury porosimetry (in accordance with JIS R 1655: 2003).

. As to Formula (1)

Since the porous ceramic sintered body is porous, the relative density D (%) needs to be low to some extent. In the third embodiment, the relative density D is 35% or more and 75% or less. This is expressed in Formula (1).

$$35\% \leq D \leq 75\% \cdots (1)$$

The relative density D is preferably 40% or more and 70% or less, more preferably 42% or more and 60% or less, and still more preferably 45% or more and 55% or less.

The relative density D is calculated from the bulk density of the porous ceramic sintered body and the theoretical density of the ceramic constituting the sintered body. First, the bulk density is calculated in accordance with JIS R 1634: 1998. Next, the relative density D is calculated by dividing the bulk density by the theoretical density of the ceramic constituting the porous ceramic sintered body (for example, in the case of alumina, the theoretical density is 3.95 g/cm$^3$).

· As to Formula (2)

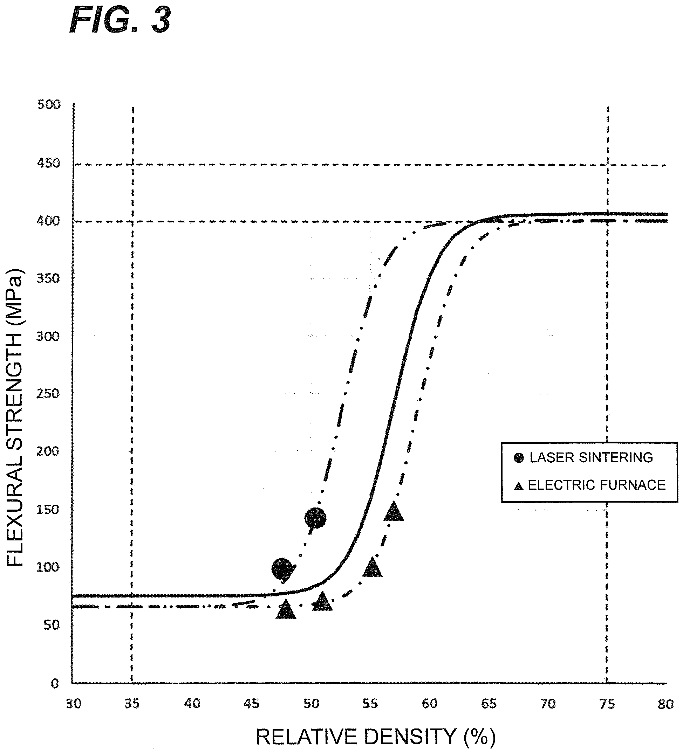

The present inventors prepared a porous ceramic sintered body calcined in a conventional electric furnace as in Patent Document 1 and a porous ceramic sintered body sintered by laser irradiation as in the first embodiment, and studied them. For the porous ceramic sintered bodies (porous alumina sintered bodies) prepared in Examples, the flexural strength P with respect to the relative density D was plotted, and the results as shown in Fig. 3 were obtained. As compared with the porous alumina sintered body calcined in the electric furnace (marked with ▲), it has been found that the porous alumina sintered body laser-sintered (marked with •) tends to have a high flexural strength P even at the same relative density D. The present inventors have intensively studied a relational expression capable of expressing the relationship between the relative density D and the flexural strength P, and resultantly have found that when it is assumed that the following preconditions i) to iii) are satisfied, the relationship between the relative density D and the flexural strength P can be expressed using a sigmoidal function.

(Preconditions)

i) Ceramic article (alumina article) before sintering

Precondition i) is a precondition related to a range in which a flexural strength is substantially equal to the flexural strength at a relative density of 35% in the graph of Fig. 3.

The object is a ceramic article (alumina article) obtained by molding (for example, press-molding) a ceramic powder (alumina powder). In a region where the relative density is 35% or more, it is assumed that the strength of the ceramic article is substantially constant at low strength. In addition, since this stage is before sintering, the ceramic article for electric furnace calcination and the ceramic article for laser sintering have the same value of strength, and their strength is constant.

ii) Porous ceramic sintered body (porous alumina sintered body) having low relative density

Precondition ii) is a precondition related to a range in which the flexural strength increases as the relative density increases in the graph of Fig. 3.

The object is assumed to be a porous ceramic sintered body that can be formed after a ceramic article starts to be sintered and before the ceramic article is sufficiently sintered. Since sintering has not been sufficiently proceeded, the relative density is low. As sintering proceeds, both the relative density and the flexural strength of the ceramic sintered body increase. When the relative density increases to some extent, the flexural strength rapidly increases.

iii) Porous ceramic sintered body (porous alumina sintered body) having high relative density

Precondition iii) is a precondition related to a range in which a flexural strength is substantially equal to the flexural strength at a relative density of 75% in the graph of Fig. 3.

The object is a porous ceramic sintered body sufficiently sintered, and has high flexural strength. The flexural strength is assumed to be substantially constant at a value close to the flexural strength of a relatively dense alumina sintered body (about 400 to 500 MPa). In the graph of Fig. 3, the flexural strength is assumed to be about 400 MPa.

As illustrated in Fig. 3, a graph obtained by fitting a plot of the relative density and the flexural strength of the porous alumina sintered body calcined in the electric furnace with a sigmoidal function (dashdotted line) and a graph obtained by fitting a plot of the relative density and the flexural strength of the laser-sintered porous alumina sintered body (dashdotdotted line) are drawn. Then, a graph passing between those graphs (solid line) is drawn. The solid line graph is assumed to be a graph showing the relative density-flexural strength threshold of the porous ceramic sintered body of the third embodiment.

From the solid line graph, it can be estimated that the flexural strength is substantially constant when the relative density is about 65% or more. In addition, in the graph of the measured value of laser irradiation (dashdotdotted line), the flexural strength can be estimated to be substantially constant when the relative density is about 61% or more. In the graph of the measured value of electric furnace calcining (dashdotted line), the flexural strength can be estimated to be substantially constant when the relative density is about 67% or more.

Since the porous ceramic sintered body of the third embodiment (marked with ●) is on the left side with respect to the solid line graph of Fig. 3, the value obtained by dividing the flexural strength of the porous ceramic sintered body by the flexural strength determined from the solid line graph (sigmoidal function) is larger than 1. This is expressed by Formula (2):

$$1 < P/(331/(1 + \exp(-0.55 \times (D\text{-}57))) + 75) \cdots (2)$$

where

D is the relative density (%) of the porous ceramic sintered body,
P is the flexural strength (MPa) of the porous ceramic sintered body.

The present inventors have chosen a sigmoidal function mainly for appropriately expressing the range of ii) "Porous ceramic sintered body having low relative density".

· As to Formula (3)

Generally, the flexural strength of a relatively dense ceramic sintered body (for example, an alumina sintered body) is approximately 400 to 500 MPa. Since the third embodiment is a porous ceramic sintered body (for example, a porous alumina sintered body), the flexural strength is less than 500 MPa. In addition, it is assumed that the flexural strength of the porous ceramic sintered body of the present embodiment takes a value around 400 MPa as illustrated in Fig. 3. In the third embodiment, the upper limit of the flexural strength P (MPa) of the porous ceramic sintered body is set to 450 MPa, which is an intermediate value between those values of flexural strength (500 MPa and 400 MPa). This is expressed in Formula (3).

$$P < 450 \text{ MPa} \cdots (3)$$

Since the porous ceramic sintered body of the third embodiment has a small pore diameter, a low relative density, and a high flexural strength, a high specific surface area and weight reduction of the porous ceramic sintered body can be achieved. In addition, since the flexural strength is high, it is presumed that the bonding strength between ceramic particles is high, that is, necks among the ceramic particles have grown to some extent. Therefore, the porous ceramic sintered body of the third embodiment is expected to have a relatively high thermal conductivity as compared with a porous ceramic sintered body having a similar relative density among conventional porous ceramic sintered bodies. Therefore, the porous ceramic sintered body of the third embodiment can be suitable for use as a heat dissipating filler with a reduced weight.

The porous ceramic sintered body has an open porosity of preferably 35% or more and less than 60%, more preferably 40% or more and less than 60%, further preferably 45% or more and 58% or less, and particularly preferably 50% or more and 55% or less.

When the open porosity is in the above range, a porous ceramic sintered body suitable for use as a catalyst carrier or use as a separation membrane is obtained.

For example, when the porous ceramic sintered body is used as a catalyst carrier, it can support a catalyst even inside the open pores thereof when the open porosity is in the above range. At the time of causing a catalytic reaction using the supported catalyst, a fluid containing a reactant flows into and out of the open pores, and the catalytic reaction occurs in the open pores, so that the reaction efficiency can be increased. In addition, the porous ceramic sintered body can also ensure sufficient strength for use as a catalyst carrier.

Furthermore, when the porous ceramic sintered body is used as a separation membrane, it is conceivable that the liquid permeation performance is improved when the open porosity is in the above range. Additionally, the porous ceramic sintered body can also ensure sufficient strength for use as a separation membrane.

The open porosity is a pore connected to the surface of an object, and is measured in accordance with JIS R 1634: 1998 (Archimedes' method).

EXAMPLES

(Examples 1 to 2, Comparative Examples 1 to 5)

(1) Manufacture of porous ceramic sintered body

The kind and physical properties (tamped density, median diameter) of the ceramic powder raw materials used in Examples 1 to 2 and Comparative Examples 1 to 5, the molding conditions of the ceramic articles prepared by pressure molding the ceramic powder raw materials, the sintering method and the sintering conditions of the ceramic articles are given in Tables 1 to 2. In Table 2, "-" means that the specified treatment was not performed.
The underlined items in the tables each indicate that the requirements of the embodiment of the present invention are not satisfied.
As a raw material powder, commercially available $\alpha$-alumina powders (AKP-3000 and AKP-20: manufactured by Sumitomo Chemical Co., Ltd.) were used.
The tamped density was measured in accordance with JIS R 9301-2-3 (1999) "Alumina powder-Part 2: Determination of physical properties-3: Untamped density and tamped density". First, a raw material powder was freely fallen and collected in a container (cylinder) having a known volume that was placed at rest with prevention from vibration. Thereafter, the cylinder containing the sample was dropped 100 times from a height of 3 cm to perform tapping (compression). The volume of the compressed sample was read, and the mass was divided by the volume to calculate a tamped density. It was confirmed in the course of the 100 tappings that the volume of the powder after compression had been saturated, and then measurement was carried out.
As to the particle size (median diameter) of the raw material powder, the particle size distribution was measured and the value of D50 was determined. The particle size distribution measurement was performed using a laser particle size distribution analyzer ["Microtrac MT3300EXII" manufactured by MicrotracBEL Corp.]. A small amount of the ceramic powder to be measured was added to a 0.2% by mass aqueous sodium hexametaphosphate solution (hereinafter also referred to as "dispersion liquid"), and the raw material powder was dispersed in an ultrasonic wave built in the device at 40 W for 5 minutes. The refractive index of alumina was defined to be 1.76.
A raw material powder (300 mg) was taken up and loaded into a mold for pellet molding (having a cylindrical shape with an inner diameter equal to a pellet diameter), and pressurized at the molding pressure given in Table 1 for 30 seconds with a uniaxial pressing machine, affording an alumina pellet for sintering (alumina article sample).
In Examples and Comparative Examples in which laser sintering was performed, carbon coating was first performed. The surface of the alumina article sample was sprayed with aerosol dry graphite film-forming lubricant "DGF spray" (product name) manufactured by Nippon Ship Tool Co., Ltd. for about 1 second. Thereafter, the resultant was allowed to stand for 30 seconds, affording a laminate sample having a carbon powder-containing layer having a thickness of about 5$\mu$m.
Subsequently, a surface of the carbon powder-containing layer of the laminate sample was irradiated with a laser beam having a wavelength of 1070 nm. The laser output, spot size, and scan speed are given in Table 2.
In Comparative Examples in which electric furnace calcination was performed, the temperature was raised to a calcination temperature at 2 °C/min and heated at the calcination temperature for 2 hours using a high-temperature calcination electric furnace (SUPER-BURN: manufactured by Motoyama Co., Ltd.).
The following physical properties were measured for the obtained porous alumina sintered body sample (hereinafter referred to as "sintered body sample").

(Relative density)

In the measurement of the relative density, first, a bulk density was calculated by the Archimedes' method in accordance with JIS R 1634: 1998. The bulk density was determined by the following Formula (4). Then, the bulk density was divided by the theoretical density of alumina (3.95 g/cm$^3$) to calculate a relative density.

$$\text{Bulk density (g/cm}^3\text{)} = W1 \div (W3 - W2) \times \rho \cdots (4)$$

where, W1 is the dry mass (g) of the sintered body sample, W2 is the mass (g) in liquid of the sintered body sample, W3 is the liquid-containing mass (g) of the sintered body sample, and $\rho$ is the density (g/cm$^3$) of the liquid (medium liquid) at the time of the test.
Water (specific gravity $\rho$ = 1.00 g/cm$^3$) was used as the liquid (medium liquid) at the time of the test. Also in various measurements using the Archimedes' method described below, water was used as a liquid.

(Open porosity)

The open porosity was determined by the Archimedes' method in accordance with JIS R 1634: 1998. The open porosity was calculated by the following Formula (5).

$$\text{Open porosity (\%)} = (W3 - W1) \div (W3 - W2) \times 100 \cdots (5)$$

where, W1 is the dry mass (g) of the sintered body sample, W2 is the mass (g) in liquid of the sintered body sample, and W3 is the liquid-containing mass (g) of the sintered body sample.

(Average pore diameter)

Regarding the average pore diameter, pore distribution was evaluated from the relational expression between the pressure and the liquid amount using a mercury intrusion porosimeter in accordance with JIS R 1655: 2003.

(Three-point bending)

The three-point bending was measured in accordance with JIS R 1601: 2008. First, a sintered body sample having φ 15 mm was cut to prepare a test piece of a porous ceramic sintered body having the shape of a standard test piece I (length: 12 mm, width: 4 mm, thickness: 1.1 mm). The test piece obtained is placed on two fulcrums disposed at a certain distance (8 mm). A load was applied to the test piece from above at the center position between the fulcrums, and the maximum load when the test piece was broken was measured. Using the measurement results, a flexural strength was calculated from the following Formula (6).

$$\sigma_{b3} = 3PL \div 2wt^2 \cdots (6)$$

where, $\sigma_{b3}$ is a three-point flexural strength (MPa), P is the maximum load (N) when the test piece was broken, L is a distance between fulcrums (8 mm), w is a width of the test piece (4 mm), and t is a thickness of the test piece (1.1 mm).

[Table 1]

| | Sintering method | Raw material | | | Carbon application method | Pellet diameter (mm) | Molding pressure (MPa) |
| | | Raw material powder | Tamped density (g/cm$^3$) | Particle size D50 (μm) | | | |
|---|---|---|---|---|---|---|---|
| Example 1 | Laser sintering | α-Alumina AKP-3000 | 0.8 | 0.70 | Spray coating | φ15 | 10 |
| Example 2 | | | 0.8 | 0.70 | Spray coating | φ15 | 10 |
| Comparative Example 1 | Electric furnace | | 0.8 | 0.70 | None | φ15 | 10 |
| Comparative Example 2 | | | 0.8 | 0.70 | None | φ15 | 10 |
| Comparative Example 3 | | | 0.8 | 0.70 | None | φ15 | 10 |
| Comparative Example 4 | | | 0.8 | 0.70 | None | φ15 | 10 |
| Comparative Example 5 | Laser sintering | α-Alumina AKP-20 | 1.4 | 0.46 | Spray coating | φ10 | 10 |

[Table 2]

| | Sintering method | Laser sintering | | | | Electric furnace calcination | |
|---|---|---|---|---|---|---|---|
| | | Laser output (W) | Spot size (mm) | Scanning speed (mm/s) | Average laser density (W/cm$^2$) | Electric furnace temperature (°C) | Heating time (min) |
| Example 1 | Laser sintering | 200 | 10 | 300 | 255 | - | - |
| Example 2 | | 300 | 10 | 300 | 382 | - | - |
| Comparative Example 1 | Electric furnace | - | - | - | - | 1200 | 120 |
| Comparative Example 2 | | - | - | - | - | 1250 | 120 |
| Comparative Example 3 | | - | - | - | - | 1300 | 120 |
| Comparative Example 4 | | - | - | - | - | 1350 | 120 |
| Comparative Example 5 | Laser sintering | 250 | 10 | 300 | 318 | - | - |

[Table 3]

| | Sintered body sample | | | | |
|---|---|---|---|---|---|
| | Relative density (%) | Open porosity (%) | Average pore diameter (μm) | Three-point bending (MPa) | Value of right side in Formula (2) |
| Example 1 | 47.6 | 50.8 | 0.20 | 98.3 | 1.3 |
| Example 2 | 50.4 | 48.0 | 0.20 | 142.3 | 1.7 |
| Comparative Example 1 | 47.9 | 51.0 | 0.21 | 64 | 0.8 |
| Comparative Example 2 | 51.0 | 48.0 | 0.21 | 71.5 | 0.8 |
| Comparative Example 3 | 55.2 | 43.5 | - | 100.5 | 0.6 |
| Comparative Example 4 | 57.0 | 41.7 | - | 149 | 0.6 |
| Comparative Example 5 | 76.1 | - | - | - | - |

Since the sintered body samples of Examples 1 and 2 were manufactured by manufacture methods satisfying the manufacture processes of the embodiments using alumina particles satisfying the requirements of the embodiments, both a low relative density and a high thermal conductivity were achieved.

In Comparative Examples 1 to 4, since an electric furnace was used in the sintering step, none of the obtained sintered body samples satisfied Formula (2), and the flexural strength with respect to the relative density was not sufficiently improved.

In Comparative Example 5, since the ceramic powder (alumina powder) as the raw material had a high tamped density, the ceramic sintered body (alumina sintered body) obtained had a high relative density. In addition, the shrinkage rate at the time of sintering by laser irradiation was high. As a result, the alumina sintered body was cracked after sintering.

(Examples 3 to 4, Comparative Example 6)

(1) Manufacture of porous ceramic sintered body

The kind and physical properties (tamped density, median diameter) of the ceramic powder raw materials used in Examples 3 to 4 and Comparative Example 6, the molding conditions of the ceramic articles prepared by pressure molding the ceramic powder raw materials, the sintering method and the sintering conditions of the ceramic articles are given in Tables 4 to 5. In Table 5, "-" means that the specified treatment was not performed.

The underlined items in the tables each indicate that the requirements of the embodiment of the present invention are not satisfied.

The various measurement methods, the molding conditions of a ceramic article, the sintering method and the sintering conditions of a ceramic article were the same as the sintering method and the sintering conditions described in "Examples 1 to 2, Comparative Examples 1 to 5". The thermal conductivity was measured as follows.

(Thermal conductivity)

The thermal diffusivity, the specific heat capacity, and the bulk density were measured, and the thermal conductivity ($\lambda$) was calculated from a product of the measured values.

The bulk density was measured using the measurement method described in "Examples 1 to 2, Comparative Examples 1 to 5". The thermal diffusivity and the specific heat capacity were measured as follows.

The thermal diffusivity was determined by a flash method in accordance with JIS R 1611: 2010.

The specific heat capacity was measured by a DSC method in accordance with JIS R 1672: 2006.

[Table 4]

| | Sintering method | Raw material | | | Carbon application method | Pellet diameter (mm) | Molding pressure (MPa) |
|---|---|---|---|---|---|---|---|
| | | Raw material powder | Tamped density (g/cm$^3$) | Particle size D50 ($\mu$m) | | | |
| Example 3 | Laser sintering | $\alpha$- Alumina AKP- 3000 | 0.8 | 0.70 | Spray coating | $\varphi$8 | 10 |
| Example 4 | | | 0.8 | 0.70 | Spray coating | $\varphi$8 | 10 |
| Comparative Example 6 | <u>Electric furnace</u> | | 0.8 | 0.70 | None | $\varphi$8 | 10 |

[Table 5]

| | Sintering method | Laser sintering | | | | Electric furnace calcination | |
|---|---|---|---|---|---|---|---|
| | | Laser output (W) | Spot size (mm) | Scanning speed (mm/s) | Average laser density (W/cm$^2$) | Electric furnace temperature (°C) | Heating time (min) |
| Example 3 | Laser sintering | 300 | 10 | 300 | 382 | - | - |
| Example 4 | | 350 | 10 | 300 | 446 | - | - |
| Comparative Example 6 | <u>Electric furnace</u> | - | - | - | - | 1200 | 120 |

[Table 6]

| | Sintered body sample | | |
|---|---|---|---|
| | Relative density (%) | Open porosity (%) | Thermal conductivity (W/m·K) |
| Example 3 | 52.0 | 46.5 | 5 |

(continued)

| | Sintered body sample | | |
| --- | --- | --- | --- |
| | Relative density (%) | Open porosity (%) | Thermal conductivity (W/m·K) |
| Example 4 | 61.0 | 37.7 | 7 |
| Comparative Example 6 | 52.1 | 47.3 | 2.6 |

Since the sintered body samples of Examples 3 and 4 were manufactured by manufacture methods satisfying the manufacture processes of the embodiments using alumina particles satisfying the requirements of the embodiments, both a low relative density and a high thermal conductivity were achieved. From this, it is presumed that the porous ceramic sintered bodies obtained have a high bonding force among ceramic particles although the relative density is low.

In Comparative Example 6, since an electric furnace was used in the sintering step, the sintered body sample obtained had a low relative density but also had a low thermal conductivity. From this, it is presumed that the porous ceramic sintered body obtained has a low bonding force among ceramic particles.

This application claims the priority based on Japanese Patent Application No. 2021-072062 filed on April 21, 2021. Japanese Patent Application No. 2021-072062 is incorporated herein by reference.

EXPLANATION OF REFERENCES

| | |
| --- | --- |
| 10 | Ceramic powder |
| 20,200 | Laminate |
| 21 | Ceramic article |
| 22 | Carbon powder-containing layer |
| 23 | Base material |
| 30 | Laser irradiation means |
| 31 | Laser beam |
| 31E | Irradiated position |
| 31R | Region immediately below irradiated position |
| 40 | Porous ceramic sintered body |
| 41 | Porous ceramic sintered portion |
| 42 | Non-sintered portion |
| 60 | Mold |
| 61 | Pressurizing jig |

**Claims**

1.   A method for manufacturing a porous ceramic sintered body comprising:

molding a ceramic powder having a tamped density of 1.0 g/cm$^3$ or less to obtain a ceramic article;
forming a carbon powder-containing layer on a surface of the ceramic article to obtain a laminate; and
irradiating a surface of the carbon powder-containing layer of the laminate with a laser beam to form a porous ceramic sintered portion.

2.   The method for manufacturing a porous ceramic sintered body according to claim 1, wherein the ceramic powder is a powder composed of one compound selected from the group consisting of aluminum oxide, aluminum oxynitride, and aluminum nitride.

3.   The method for manufacturing a porous ceramic sintered body according to claim 1 or 2, wherein the laser beam to be applied has an average laser density of 150 W/cm$^2$ or more and 600 W/cm$^2$ or less.

4.   A porous ceramic sintered body having an average pore diameter of 0.01 $\mu$m or more and 1.00 $\mu$m or less, and satisfying the following formulas (1) to (3):

$$35\% \leq D \leq 75\% \cdots (1)$$

$$1 < P/(331/(1 + \exp(-0.55 \times (D-57))) + 75) \cdots (2)$$

$$P < 450 \, \text{MPa} \cdots (3)$$

where

D is a relative density (%) of the porous ceramic sintered body, and
P is a flexural strength (MPa) of the porous ceramic sintered body.

5. The porous ceramic sintered body according to claim 4, wherein the porous ceramic sintered body has an open porosity of 35% or more and less than 60%.

## FIG. 1A

## FIG. 1B

**FIG. 1C**

**FIG. 1D**

# FIG. 2A

# FIG. 2B

## FIG. 2C

# FIG. 3

## INTERNATIONAL SEARCH REPORT

| International application No. |
| --- |
| **PCT/JP2022/015654** |

| A. | CLASSIFICATION OF SUBJECT MATTER |
| --- | --- |

*B28B 1/30*(2006.01)i; *C04B 38/00*(2006.01)i; *C04B 35/10*(2006.01)i
FI:    C04B38/00 303Z; C04B38/00 304Z; C04B35/10; B28B1/30

According to International Patent Classification (IPC) or to both national classification and IPC

| B. | FIELDS SEARCHED |
| --- | --- |

Minimum documentation searched (classification system followed by classification symbols)

B28B1/30; C04B35/00-C04B35/84; C04B38/00-C04B38/10; B33Y10/00; B33Y70/00; B29C64/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 102172449 A (WUXI YUANQING HI-TECH RESEARCH INSTITUTE CO., LTD.) 07 September 2011 (2011-09-07) | 4-5 |
| | paragraph [0090], table 1 | |
| A | | 1-3 |
| X | JP 2000-335985 A (SUMITOMO ELECTRIC IND LTD) 05 December 2000 (2000-12-05) | 4-5 |
| | paragraph [0064], table 1 | |
| A | | 1-3 |
| A | WO 2020/196605 A1 (SUMITOMO CHEMICAL COMPANY, LIMITED) 01 October 2020 (2020-10-01) | 1-5 |
| A | JP 8-12323 A (SUMITOMO CHEMICAL CO) 16 January 1996 (1996-01-16) | 1-5 |
| A | WO 2018/047871 A1 (SUMITOMO CHEMICAL COMPANY, LIMITED) 15 March 2018 (2018-03-15) | 1-5 |

☑ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 May 2022** | **24 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 327 997 A1

**INTERNATIONAL SEARCH REPORT**

International application No.

**PCT/JP2022/015654**

## C. DOCUMENTS CONSIDERED TO BE RELEVANT

| Category* | Citation of document, with indication, where appropriate, of the relevant passages | Relevant to claim No. |
|---|---|---|
| A | JP 7-206538 A (AGENCY OF IND SCIENCE & TECHNOL) 08 August 1995 (1995-08-08) | 1-5 |
| A | JP 2020-93973 A (CANON KABUSHIKI KAISHA) 18 June 2020 (2020-06-18) | 1-5 |
| A | PFEIFFER, Stefan et al. Iron Oxide Doped Spray Dried Aluminum Oxide Granules for Selective Laser Sintering and Melting of Ceramic Parts. Advanced Engineering Materials. 2019, vol. 21 no. 6 p. 1801351, pp. 1-14, doi:10.1002/adem.201801351 abstract, fig. 4 | 1-5 |

Form PCT/ISA/210 (second sheet) (January 2015)

22

### INTERNATIONAL SEARCH REPORT
**Information on patent family members**

International application No.

**PCT/JP2022/015654**

| Patent document cited in search report | | | Publication date (day/month/year) | Patent family member(s) | | | Publication date (day/month/year) |
|---|---|---|---|---|---|---|---|
| CN | 102172449 | A | 07 September 2011 | (Family: none) | | | |
| JP | 2000-335985 | A | 05 December 2000 | (Family: none) | | | |
| WO | 2020/196605 | A1 | 01 October 2020 | KR | 10-2021-0142641 | A | |
| JP | 8-12323 | A | 16 January 1996 | US | 5573582 | A | |
| | | | | CN | 1122772 | A | |
| WO | 2018/047871 | A1 | 15 March 2018 | US | 2019/0051906 | A1 | |
| JP | 7-206538 | A | 08 August 1995 | (Family: none) | | | |
| JP | 2020-93973 | A | 18 June 2020 | US | 2021/0309575 | A1 | |

Form PCT/ISA/210 (patent family annex) (January 2015)

**EP 4 327 997 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014227324 A
- WO 2017135387 A
- JP 2021072062 A